# EUROPEAN PATENT SPECIFICATION

(11) **EP 1 488 706 B1**
(45) Date of publication and mention of the grant of the patent: **20.12.2006**
(21) Application number: 03425365.8
(22) Date of filing: 10.06.2003
(51) Int. Cl.: A23L 1/176, A23L 1/18

(54) **A precooked breaded food product**
Vorgekochtes und paniertes Lebensmittel
Un produit précuit et pané

(43) Date of publication of application: 22.12.2004
(73) Proprietor: S.p.A. Egidio Galbani, 20066 Melzo (Milano) (IT)
(72) Inventor: Mattei, Gianfranco c/o S.p.A. Egidio Galbani, 20066 Melzo (Milano) (IT)
(74) Representative: Long, Giorgio

(56) References cited:
- US-A- 5 759 599
- US-A1- 2002 090 421
- US-A1- 2003 039 735
- DATABASE FSTA [Online] INTERNATIONAL FOOD INFORMATION SERVICE (IFIS), FRANFURT/MAIN, DE; PSZCZOLA D E: "Rice: not just for throwing." Database accession no. 2001-00-m0698 XP002260769 & FOOD TECHNOLOGY 55 (2) 53-54, 56-59 2001 INST. OF FOOD TECHNOLOGISTS, 221 NORTH LASALLE ST., CHICAGO, IL 60601, USA. E-MAIL DEPSZCZOLA(A)IFT.ORG,
- PATENT ABSTRACTS OF JAPAN vol. 010, no. 185 (C-357), 27 June 1986 (1986-06-27) & JP 61 035754 A (NISSHIN D C EE SHOKUHIN KK), 20 February 1986 (1986-02-20)
- DATABASE FSTA INTERNATIONAL FOOD INFORMATION SERVICE (IFIS), FRANkFURT-MAIN, DE; 1971, WYCHE R C; GOODWIN T L: "The effectof retort cooking pressure and breading technique on yield and percent breading of broiler parts"

## Description

The present invention relates to a breaded type precooked food product, in particular to a cheese based breaded food product and to a method for the preparation thereof.

The precooked breaded products available on the market are generally produced through methods which comprise the battering stage of a substrate such as meat, fish or cheese, followed by a breading stage and finally a precooking stage in oil (frying).

The battering stage consists in putting a food product such as meat, fish or cheese in contact with a batter or a food preparation which allows the later breading to adhere to said product. For example, the batter can be composed of a very common mixture of water, flour and salt into which the product is soaked.

The breading stage consists in placing the battered product in contact with breadcrumbs sometimes combined with maize and/or potato flour. Crisp rice is also used (see e.g. US 2002/0090421).

This way, the breadcrumbs, thanks to the batter, stick to the product and allow, during the precooking stage, the formation of a crispy and golden outer layer typical of breaded food products. In fact, usually, the precooked breaded products on the market are subjected to precooking through immersion in hot oil and left to fry for an amount of time sufficient to form the above mentioned crispy layer.

The food products thus prepared are sold as precooked breaded food storable in refrigerated counters at a temperature of around +4°C for some days. The advantage of said foods is that of having available a very quick to prepare meal in that they do not require complete cooking but only a few minutes to heat and/or finish the cooking. In addition, foodstuffs, thus prepared are appetising in that they are covered in a golden and crispy breaded layer which finds approval with the consumers.

That notwithstanding, the above mentioned foodstuffs have a disadvantage associated with storage related to their crispiness and nutritional aspects. In fact it has been ascertained that breaded foodstuffs must necessarily be subjected to precooking in oil to maintain the crispiness. This way, however, the finished product absorbs large amounts of oil. It is clear that from the nutritional point of view the precooked foodstuffs just illustrated are rather disadvantaged. Instead it would be nutritionally advisable to be able to perform the precooking in an oven, therefore without the addition of any fats, which has however up to now been impeded by the unacceptable organoleptic characteristics of the precooked product thus obtained.

The technical problem of the present invention is therefore that of making available precooked breaded food products endowed with optimal organolectic characteristics of crispiness and at the same time avoiding products impregnated with oil.

Such a problem is solved by a precooked breaded food product as reported in the main claims attached herein below.

A further technical problem is that of making available a method for the production of precooked breaded products which is able to supply products with optimal crispiness and a reduced oil content for frying.

Such a further technical problem is solved by a method as reported in the attached claims.

The characteristics and advantages of the above mentioned product and method will become clearer from the following detailed description of the invention.

The precooked breaded food product in agreement with the present invention is covered in breading comprising an external layer of puffed rice. In particular, said layer of puffed rice has a thickness varying from 1 mm to 3 mm.

Preferably, the external layer of puffed rice is constituted by extruded puffed rice. Said extruded puffed rice can be composed for example by essentially spherical granules having a diameter of around 3 mm.

Advantageously, in addition, the breading comprises an internal layer of breadcrumbs and/or cornflour and/or potato flour.

According to a variant embodiment of the product in the subject, the breading can comprise other ingredients commonly used in the sector such as, for example, egg and grated cheese.

It is to be noted that the precooked breaded food product can comprise a base of whatever foodstuff is normally used in the sector such as meat, fish, cheese, vegetables or a combination of them such as ham and cheese (*"cordon bleu"* or *"valdostane"*). Preferably, said food product comprises a base of woven cheese paste such as *mozzarella,* prepared in pieces of the desired shape and dimensions, covered in said breading.

In agreement with a further subject of the invention, it has been found that a precooked breaded food product can be advantageously obtained through a procedure which envisages the application of a layer of breading, based on puffed rice, on its external surface prior to precooking.

In particular, the procedure comprises the following stages in succession:
a) preparing a batter to apply onto said product;
b) preparing a breading based on puffed rice;
c) applying a layer of batter onto the surface of said product;
d) applying a layer of said breading onto said batter;
e) precooking the thus breaded product.

The preparation of the batter for breading occurs in agreement with the methods widely known in the food sector. For example, the batter can be prepared by mixing water, flour and salt in the desired quantities. Sometimes, the batter can be enriched with various or additional ingredients such as beaten egg and grated cheese. The batter can be prepared in large quantities and stored in appropriate containers ready for use.

The breading is prepared separately, which, according to the present invention, is constituted by a layer of puffed rice.

In particular, the layer of puffed rice can be prepared according to any of the methods of the known art such as for example the wet puffing method, the dry puffing method or the gun puffing method. In any case, independently of the type of method used, the breading, which externally covers the product of interest, must be constituted of rice subjected to a rapid heating which causes the expansion and the release of its water contents so as to form pores, increase the volume and hardens the tissue.

At this point, the batter is applied to the surface of the food product of interest for example by the immersion of the product itself into the batter. It is to be noted that according to the present invention it is possible to provide a breaded food product based on meat, fish or cheese as well as combinations of said foods such as for example ham and cheese.

once the batter has been applied onto the surface of the food product in the form of a layer, the breading is in turn applied onto the external surface of the product thanks to its adhesion onto said layer of batter.

The food product is thus ready to be precooked. In particular, the precooking can be advantageously realised in an oven thus avoiding cooking by frying which causes the absorption of oil by the batter.

Alternatively, the precooking can be realised by frying in agreement with the normal procedure.

In addition, it has been found that precooking by frying is not necessary to maintain the characteristic crispiness, but it is possible to precook, as said, for example in an oven. It is clear that this operation also allows the attainment of a better food product from the nutritional point of view.

Preferably, in addition, the procedure according to the invention can comprise an application stage, onto the surface of the product, of a breading based on breadcrumbs, maize and/or potato flour, prior to the application of the above mentioned puffed rice based breading.

In fact it has been found that a prior breading of the product with a layer of breadcrumbs, or a similar normally used breading, allows the covering of the product in a uniform and regular manner, thanks to the finer grain of the breadcrumbs with respect to the puffed rice.

In particular, even the first breading can be realised after having battered the food product with a batter identical to that previously described.

The precooking can occur, as already mentioned, both in the oven and by frying according to the usual procedures.

According to a preferred embodiment of the present invention, the procedure in the subject can be realised by using extruded puffed rice. The extruded puffed rice can be prepared using an extrusion puffing method, known in the art.

This type of method advantageously allows the provision of the maximum expansion and crispiness of the rice. In fact, the percentage of puffed material obtainable through this method is greater than or equal to 90% and the water content is considerably lowered with respect to non extruded puffed rice.

In general, it is known that the technology used to obtain extruded puffed rice consists of a preliminary stage in which a defined quantity of rice is placed in contact with water in a way such that it is absorbed by the grains of rice. Later, the water soaked rice is extruded at a high temperature and under pressure so as to obtain granules of extruded puffed rice. Preferably, the granules of extruded puffed rice have a diameter between 0.2 mm and 5 mm. Furthermore, the extruded puffed rice can be "caramelised". The caramelisation step envisages that the rice dough is added to with sugar prior to the extrusion step, so that, thanks to the high temperature at which the extrusion takes place, the sugar is subjected to caramelisation. Through this operation, it is possible to impart better crispiness and humidity resistance onto the product.

According to a particularly preferred embodiment, the extruded puffed rice is produced with a technology which, briefly, envisages the treatment of the rice, reduced to flour, inside a twin screw extruder with a liquid mixture, at defined temperature and pressure.

It has been observed that the extruded products expanded with the above mentioned technology allow the attainment of further advantages with respect to non extruded puffed rice. In fact, the final product has optimal digestibility in that it has been found that over 80% of the starch of the breading is gelatinised. Furthermore, the crispiness and the friability of the breading are incredibly increased since the values of residual humidity recorded are lower than 5% by weight. Finally, but not least in importance, the residual levels of microbial load are very low. That is due to the fact that the puffed rice is sterile upon exiting from the extruder.

Following is reported an example embodiment of the invention with reference to the latest type of technology just briefly described.

### EXAMPLE

40 kg of mozzarella cake is ground and then loaded into a moulding machine upon exit from which mozzarella half-moons are formed with a diameter of around 97 mm.

Previously, the batter is prepared, in an entirely conventional manner, using 40 kg of batter powder, 600 grams of salt and 80 litres of water, the batter is stored at a temperature of around 4°C.

Also the breading, as for the batter, is partly prepared previously through a rice extrusion puffing procedure. In particular, the procedure comprises a prior step in which the rice is reduced to flour and sent to the extruder. The extruder is fundamentally composed of two worm co-rotating screws which make the rice advance towards a chamber with a very reduced space. The screws, in the meantime, also function as mixers for the rice and the other ingredients added in the liquid phase. Said ingredients are prepared in the form of a syrup constituted by water, sugar, malt and salt. The extruder works at a temperature of between 100 and 170°C, at a pressure comprised of between 60 and 90 bar and for a time of between 30 and 45 seconds. At this point, the heat, friction and the pressure generated by this procedure, perform all the above transformations on the starch load present in the cereals. Under these conditions, the starch is gelatinised (cooked) and made plastic in very reduced times. The screws make the mixture advance until meeting an extruder (perforated disk) which mainly has the job of giving shape to the mixture which, due to the pressure difference between the interior and exterior of the extruder, tends to re-swell due to the expansion of the globules which make up the starch. A guillotine placed in contact with the extruder cuts and shapes the product according to fixed parameters determining the size and shape of the product desired. The expanded ball which is formed at this point is sent to the successive drying stage.

The advantage realised with the use of the technology just described lies principally in the fact that the working times are notably reduced above all when changes must be made to the ingredients so as to improve the final organolectic characteristics.

At this point, the mozzarella half-moons prepared as above are loaded into a conventional batterer to allow the depositing of the batter onto said half-moons. Upon exiting from the batterer, jets of air remove possible excesses of batter deposited on the half-moons. The battered half-moons are then breaded in a conventional way with breadcrumbs.

Later, a second deposition of batter is made entirely identical to that just described, then the half-moons are covered with a layer of extruded puffed rice.

Even the deposition of the layer of puffed rice is carried out according to normal methods. The granules of extruded puffed rice have a diameter of around 3.8-4 mm.

The half-moons thus prepared are now immersed into a fryer and precooked at a temperature of 185°C for 45 seconds.

At the end of the precooking, the half-moons are cooled to a temperature of 0-4°C and packaged in a controlled atmosphere composed of 30% CO₂, 70% N₂ with automatic residual O₂ control in agreement with entirely conventional methods and apparatus.

The precooked breaded food product which is obtained has the appearance of half-moons covered with extruded puffed rice of irregularly spherical shape and a golden brown colour.

From the organolectic point of view, the product in the subject has optimal crispiness.

## Claims

1. A precooked food product covered with a breading wherein said breading comprises an internal layer of breadcrumbs and/or cornflour and/or potato flour and an external layer of puffed rice.

2. The precooked food product according to claim 1, wherein said interal layer is made of breadcrumbs.

3. The precooked food product according to claim 1 or 2, wherein said external layer is constituted of extruded puffed rice.

4. The precooked food product according to claim 3, wherein said extruded puffed rice is composed of particles having diameters of 0.2-5 mm.

5. The food product according to any of the claims 1 to 4, wherein said product comprises a base of meat, fish, cheese and/or vegetables or combinations thereof.

6. The food product according to claim 5, wherein said product is a woven cheese paste in the form of a stick or half moon.

7. The food product according to any of the claims 1 to 6, wherein said puffed rice is caramelised.

8. A process for the preparation of a precooked food product covered with a breading comprising the application of an internal layer of breadcrumbs and/or cornflour and/or potato flour and a layer of puffed rice based breading onto its external surface.

9. A process for the preparation of precooked food product covered with a breading according to claim 8 comprising the following stages in succession:
a) preparing a batter to be applied to said product;
b) applying said batter to a food base of said product;
c) applying a first breading to said battered food base;
d) preparing a second breading based on puffed rice;
e) applying a second layer of batter onto the surface of said food base obtained according to stage c);
f) applying a layer of said puffed rice onto said layer of batter;
g) precooking said product.

10. The process according to claim 9, wherein said first breading is breadcrumb and/or maize and/or potato flour based.

11. The process according to any one of claims 8 or 10, wherein said puffed rice is extruded puffed rice.

12. The process according to claim 11, wherein the extruded puffed rice is in the form granules of puffed rice of diameter comprised of between 0.2 mm and 5 mm.

13. The process according to any of the claims 9 to 12, wherein said precooking stage g) takes place by frying.

14. The process according to any of the claims 9 to 12, wherein said precooking stage g) takes place in an oven.

15. The process according to any of the claims 8 to 14, wherein said food base comprises meat and/or fish and/or cheese and/or vegetables.

16. The process according to claim 15, wherein said food base is a woven cheese paste.

17. The process according to any of the claims 8, to 16, further comprising a caramelisation stage of said puffed rice prior to said application stage of the puffed rice onto said food base.

## Patentansprüche

1. Vorgekochtes Lebensmittelprodukt, das mit einer Panierung bedeckt ist, wobei die Panierung eine innere Schicht aus Paniermehl aufweist und/oder Maisstärke und/oder Kartoffelstärke und eine äußere Schicht aus Puffreis.

2. Vorgekochtes Lebensmittelprodukt gemäß Anspruch 1, wobei die innere Schicht aus Paniermehl besteht.

3. Vorgekochtes Lebensmittelprodukt gemäß Anspruch 1 oder 2, wobei die äußere Schicht aus extrudiertem Puffreis gebildet ist.

4. Vorgekochtes Legensmittelprodukt gemäß Anspruch 3, wobei der extrudierte Puffreis aus Teilchen gebildet ist, die einen Durchmesser von 0,2 bis 5 mm aufweisen.

5. Lebensmittelprodukt gemäß einem der Ansprüche 1 - 4, wobei das Produkt eine Basis aus Fleisch, Fisch, Käse und/oder Gemüse aufweist oder aus Kombinationen derselben.

6. Lebensmittelprodukt gemäß Anspruch 5, wobei das Produkt eine umwebte Käsepaste in der Form eines Stabes oder eines Halbmondes ist.

7. Lebensmittelprodukt gemäß einem der Ansprüche 1 - 6, wobei der Puffreis karamellisiert ist.

8. Verfahren zur Herstellung eines vorgekochten Lebensmittelproduktes, das mit einer Panierung bedeckt ist, wobei eine innere Schicht aus Paniermehl und/oder Maisstärke und/oder Kartoffelstärke und eine Schicht aus auf Puffreis basierendem Paniermehl auf dessen äußere Oberfläche aufgebracht wird.

9. Verfahren zur Herstellung eines vorgekochten Lebensmittelproduktes, das mit einer Panierung gemäß Anspruch 8 bedeckt ist und nacheinander die folgenden Schritte aufweist:
a) Herstellung einer Nasspanierung, die auf das Produkt aufgebracht werden soll;
b) Aufbringen der Nasspanierung auf eine Lebensmittelbasis des Produktes;
c) Aufbringen einer ersten Panierung auf die nasspanierte Lebensmittelbasis;
d) Herstellung einer zweiten Panierung basierend auf Puffreis;
e) Aufbringen einer zweiten Schicht Nasspanierung auf die gemäß dem Schritt c) hergestellte Lebensmittelbasis;
f) Aufbringen einer Schicht aus dem Puffreis auf die Schicht aus Nasspanierung;
g) Vorkochen des Produktes.

10. Verfahren gemäß Anspruch 9, wobei die erste Panierung Paniermehl und/oder Maisstärke und/oder Kartoffelstärke aufweist.

11. Verfahren gemäß einem der Ansprüche 8 oder 10, wobei der Puffreis extrudierter Puffreis ist.

12. Verfahren gemäß Anspruch 11, wobei der extrudierte Puffreis in der Form von Körnchen aus Puffreis vorliegt mit einem Durchmesser zwischen 0,2 mm und 5 mm.

13. Verfahren gemäß einem der Ansprüche 9 - 12, wobei der Verfahrensschritt g) des Vorkochens durch Frittieren bewirkt wird.

14. Verfahren gemäß einem der Ansprüche 9 - 12, wobei der Verfahrensschritt g) des Vorkochens innerhalb eines Ofens stattfindet.

15. Verfahren gemäß einem der Ansprüche 8 - 14, wobei die Lebensmittelbasis Fleisch aufweist und/oder Fisch und/oder Käse und/oder Gemüse.

16. Verfahren gemäß Anspruch 15, wobei die Lebensmittelbasis eine umwebte Käsepaste ist.

17. Verfahren gemäß einem der Ansprüche 8 - 16, des Weiteren aufweisend einen Verfahrensschritt der Karamellisierung des Puffreises vor dem Verfahrensschritt des Aufbringens des Puffreises auf die Lebensmittelbasis.

## Revendications

1. Produit alimentaire précuit recouvert d'une panure, dans lequel ladite panure comprend une couche interne de chapelure et/ou de farine de maïs et/ou de fécule de pomme de terre et une couche externe de riz soufflé.

2. Produit alimentaire précuit selon la revendication 1, dans lequel ladite couche interne est faite de chapelure.

3. Produit alimentaire précuit selon la revendication 1 ou 2, dans lequel ladite couche externe est constituée de riz soufflé extrudé.

4. Produit alimentaire précuit selon la revendication 3, dans lequel ledit riz soufflé extrudé est composé de particules ayant un diamètre de 0,2 à 5 mm.

5. Produit alimentaire selon l'une quelconque des revendications 1 à 4, dans lequel ledit produit comprend une base de viande, poisson, fromage et/ou légumes ou des combinaisons de ceux-ci.

6. Produit alimentaire selon la revendication 5, dans lequel ledit produit est une pâte de fromage filé sous la forme d'un bâtonnet ou d'une demi-lune.

7. Produit alimentaire selon l'une quelconque des revendications 1 à 6, dans lequel ledit riz soufflé est caramélisé.

8. Procédé pour la préparation d'un produit alimentaire précuit recouvert d'une panure comprenant l'application d'une couche interne de chapelure et/ou de farine de mais et/ou de fécule de pomme de terre et d'une couche de panure à base de riz soufflé sur sa surface externe.

9. Procédé pour la préparation d'un produit alimentaire précuit recouvert d'une panure selon la revendication 8, comprenant les étapes successives suivantes .
a) préparation d'une pâte à frire devant être appliquée sur ledit produit ;
b) application de ladite pâte à frire sur une base d'aliment dudit produit ;
c) application d'une première panure sur ladite base d'aliment recouverte de pâte à frire ;
d) préparation d'une deuxième panure à base de riz soufflé ;
e) application d'une deuxième couche de pâte à frire sur la surface de ladite base d'aliment obtenue à l'étape c) ;
f) application d'une couche dudit riz soufflé sur ladite couche de pâte à frire ;
g) précuisson dudit produit.

10. Procédé selon la revendication 9, dans lequel ladite première panure consiste en miettes de pain et/ou est à base de farine de mais et/ou de fécule de pomme de terre.

11. Procédé selon l'une quelconque des revendications 8 ou 10, dans lequel ledit riz soufflé est du riz soufflé extrudé.

12. Procédé selon la revendication 11, dans lequel le riz soufflé extrudé est sous la forme de granules de riz soufflé d'un diamètre compris entre 0,2 m et 5 mm.

13. Procédé selon l'une quelconque des revendications 9 à 12, dans lequel ladite étape de précuisson g) est réalisée par friture.

14. Procédé selon l'une quelconque des revendications 9 à 12, dans lequel ladite étape de précuisson g) est réalisée dans un four.

15. Procédé selon l'une quelconque des revendications 8 à 14, dans lequel ladite base d'aliment comprend de la viande et/ou du poisson et/ou du fromage et/ou des légumes.

16. Procédé selon la revendication 15, dans lequel ladite base d'aliment est une pâte de fromage filé.

17. Procédé selon l'une quelconque des revendications 8 à 16, comprenant, en outre, une étape de caramélisation dudit riz soufflé avant ladite étape d'application du riz soufflé sur ladite base d'aliment.
